# EUROPÄISCHE PATENTSCHRIFT

(11) **EP 3 565 751 B1**
(45) Veröffentlichungstag und Bekanntmachung des Hinweises auf die Patenterteilung: **07.10.2020**
(21) Anmeldenummer: 18704927.5
(22) Anmeldetag: 05.02.2018
(51) Int. Cl.: B61L 27/00, G05B 9/03, B61L 7/08

(54) **UMSCHALTUNG ZWISCHEN ELEMENT-CONTROLLERN IM BAHNBETRIEB**
SWITCHOVER BETWEEN ELEMENT CONTROLLERS IN RAILWAY OPERATION
COMMUTATION ENTRE CONTRÔLEURS D'ÉLÉMENTS PENDANT LE FONCTIONNEMENT D'UNE VOIE DE CHEMIN DE FER

(30) Priorität: 28.02.2017 DE 102017203220
(43) Veröffentlichungstag der Anmeldung: 13.11.2019
(73) Patentinhaber: Siemens Mobility GmbH, 81739 München (DE)
(72) Erfinder: GIESECKE, Jörn, 38302 Wolfenbüttel (DE); SCHULZ, Oliver, 31234 Edemissen (DE); SEIFERT, Matthias, 21244 Buchholz (DE)
(86) Internationale Anmeldenummer: PCT/EP2018/052733
(87) Internationale Veröffentlichungsnummer: WO 2018/158038

(56) Entgegenhaltungen:
- EP-A1- 1 118 917
- WO-A1-2006/051355
- DE-A1- 4 113 959

## Beschreibung

Die Erfindung betrifft die Umschaltung zwischen Element-Controllern im Bahnbetrieb.

Die Patentanmeldung DE 41 13 959 A1 offenbart eine Einrichtung zur Überwachung einer elektronischen Steuerung, mit einem ersten und zweiten Rechner sowie zumindest einer einem der beiden Rechner zugeordneten Überwachungseinrichtung und einer ausgangsseitig mit den beiden Rechnern verbundenen Umschalteinrichtung, die mit einer Ansteuervorrichtung verschaltet ist, wobei die dem ersten Rechner zugeordnete Überwachungseinrichtung ausgangsseitig mit einem Eingang des zweiten Rechners signalübertragend verbunden ist. Durch diese kreuzweise Verschaltung der den Rechnern zugeordneten Überwachungseinrichtungen ist im Fehlerfall beziehungsweise bei fehlerhaft auftretenden Signalen Redundanz sichergestellt. In der Patentanmeldung EP 1 118 917 A1 sind verschiedene Ausführungsformen einer Servosteuervorrichtung beschrieben. Bei einer Ausführungsform ist ein Referenzsteuerungseinsteller über eine erste Verbindung mit einem Master-Servocontroller und über eine zweite Verbindung mit einem Slave-Servocontroller verbunden, wobei der Ausgang des Slave-Servocontroller zur Steuerung anstelle desjenigen des Master-Servocontroller zum Aktor geführt wird, im Falle eines detektierten Fehlers auf der Seite des Master-Servocontroller.

Ein Element-Controller (EC), auch bezeichnet als ein Steuergerät am Gleis, ist über mindestens eine Datenverbindungen mit einem Stellwerk verbunden. Die Datenverbindung kann beispielsweise vom Typ Ethernet sein. Der Element-Controller stellt eine lokale Signalverarbeitung bereit und ist eingerichtet für einen Anschluss von eisenbahntechnischen Aktuatoren oder Sensoren. Im Zusammenspiel mit den Aktuatoren oder Sensoren ist es beispielsweise möglich, Weichen und/oder Signale anzusteuern und/oder Gleiskreise oder Achszähler auszulesen. Der Element-Controller stellt somit die Schnittstelle zwischen dem Stellwerk und den eisenbahntechnischen Aktuatoren oder Sensoren bereit.

Durch den Ausfall eines Element-Controllers würde der angeschlossene Aktuator oder Sensor für das Stellwerk nicht mehr zur Verfügung stehen. Dies schränkt die Verfügbarkeit und/oder die durch den Element-Controller bereitgestellte Funktion deutlich ein.

Die Aufgabe der Erfindung besteht darin, die vorstehend genannten Nachteile zu vermeiden und insbesondere eine effiziente und sichere Lösung im Umgang mit derartigen Element-Controllern bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Zur Lösung der Aufgabe wird ein Verfahren vorgeschlagen zum Umschalten zwischen Element-Controllern,
- wobei zwei Element-Controller vorgesehen sind, von denen ein erster Element-Controller in einem Master-Betriebsmodus und ein zweiter Element-Controller in einem Slave-Betriebsmodus betrieben wird,
- bei dem der zweite Element-Controller einen Fehler in dem ersten Element-Controller bestimmt und
- bei dem der zweite Element-Controller von dem Slave-Betriebsmodus in den Master-Betriebsmodus wechselt, indem der zweite Element-Controller über ein Triggersignal eine Auswahlschaltung so ansteuert, dass der Ausgang des zweiten Element-Controllers statt des Ausgangs des ersten Element-Controllers mit mindestens einem Aktuator und/oder mindestens einem Sensor verbunden wird.

Eine Weiterbildung ist es, dass zuvor der erste und der zweite Element-Controller aushandeln, wer in dem Master-Betriebsmodus und wer in dem Slave-Betriebsmodus betrieben wird, indem nach einer vorgegebenen Zeitdauer eine Startnachricht an den jeweils anderen Element-Controller übermittelt wird und derjenige Element-Controller in den Slave-Betriebsmodus wechselt, der diese Startnachricht empfängt bevor er eine Startnachricht gesendet hat.

Eine andere Weiterbildung ist es, dass die vorgegebene Zeitdauer basierend auf einem Zufallsgenerator, einem Pseudozufallsgenerator oder basierend auf einem deterministischen Muster bestimmt wird.

Insbesondere ist es eine Weiterbildung, dass derjenige Element-Controller, der in den Slave-Betriebsmodus wechselt, den anderen Element-Controller hierüber informiert und der andere Element-Controller daraufhin in den Master-Betriebsmodus wechselt.

Auch ist es eine Weiterbildung, dass in dem Master-Betriebsmodus der Element-Controller mit einem Stellwerk kommuniziert und bei dem in dem Slave-Betriebsmodus der Element-Controller die Kommunikation des Element-Controllers, der in dem Master-Betriebsmodus ist, überwacht.

Ferner ist es eine Weiterbildung, dass der zweite Element-Controller den Fehler bestimmt basierend auf mindestens einer der folgenden Möglichkeiten:
- einer Nachricht oder einer Fehlernachricht des ersten Element-Controllers,
- einer Nachricht von dem Stellwerk,
- anhand eines Zeitablaufs,
- anhand einer nicht gesendeten oder einer nicht angekommenen Nachricht.

Die Nachricht bzw. Fehlernachricht deutet beispielsweise einen Defekt in dem Element-Controller an.

Gemäß der Erfindung weist jeder der Element-Controller zwei Schnittstellen auf, wobei eine der Schnittstellen über eine Kommunikationsverbindung mit dem Stellwerk verbunden ist und wobei der erste Element-Controller und der zweite Element-Controller miteinander über die andere Schnittstelle verbunden sind.

Die Schnittstelle ist eine Ethernet-Schnittstelle und die Kommunikationsverbindung ist eine Ethernet-Verbindung.

Eine Ausgestaltung ist es, dass
- jeder der Element-Controller eine Kommunikationseinheit und eine Sicherheitssteuerung aufweist,
- wobei die Kommunikationseinheit mit den zwei Schnittstellen verbunden ist,
- wobei die Sicherheitssteuerung zwischen der Kommunikationseinheit und der Auswahlschaltung vorgesehen ist.

Eine alternative Ausführungsform besteht darin, dass der mindestens eine Aktuator und/oder der mindestens eine Sensor mindestens eine(n) der folgenden umfassen:
- eine Balise,
- einen Achszähler,
- eine Weiche,
- ein Signal.

Die Ausführungen betreffend das Verfahren gelten für die anderen Anspruchskategorien entsprechend.

Weiterhin wird zur Lösung der vorstehenden Aufgabe ein System vorgeschlagen zum Umschalten zwischen Element-Controllern
- umfassend ein Stellwerk, einen ersten Element-Controller, einen zweiten Element-Controller und eine Auswahlschaltung,
- wobei der erste Element-Controller in einem Master-Betriebsmodus und der zweite Element-Controller in einem Slave-Betriebsmodus betreibbar ist,
- wobei der zweite Element-Controller derart eingerichtet ist,
   - dass ein Fehler in dem ersten Element-Controller bestimmbar ist,
   - dass basierend auf dem Fehler der zweite Element-Controller derart eingerichtet ist, das der zweite Element-Controller von dem Slave-Betriebsmodus in den Master-Betriebsmodus wechselt, indem der zweite Element-Controller über ein Triggersignal eine Auswahlschaltung so ansteuert, dass der Ausgang des zweiten Element-Controllers statt des Ausgangs des ersten Element-Controllers mit mindestens einem Aktuator und/oder mindestens einem Sensor verbunden wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:
- Fig.1: eine schematische Anordnung, bei der ein Element-Controller über zwei Ethernet-Verbindungen mit einem Stellwerk verbunden ist, wobei der Element-Controller zwei (redundante) Ethernet-Schnittstellen, eine Kommunikationseinheit und eine Sicherheitssteuerung aufweist;
- Fig.2: ein schematisches Schaubild mit zwei Element-Controllern, anhand derer die Ausfallsicherheit der Kommunikation mit einem Stellwerk gegenüber dem in Fig.1 gezeigten Beispiel erhöht ist.

Beispielsweise kann ein Stellwerk sowohl einen einzelnen Element-Controller als auch einen redundant ausgelegten Element-Controller ansteuern. Im Falle des redundant ausgelegten Element-Controllers wird die Redundanzschaltung in diesen Element-Controller verlagert.

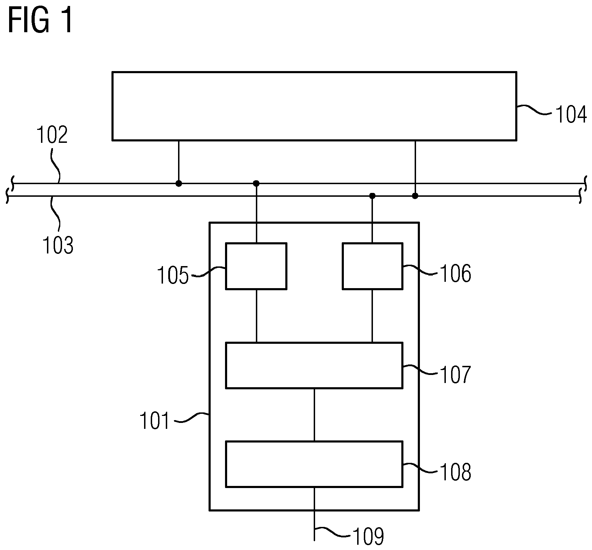

**Fig.1** zeigt eine schematische Anordnung, bei der ein Element-Controller 101 über zwei Ethernet-Verbindungen 102, 103 mit einem Stellwerk 104 verbunden ist. Hierzu weist der Element-Controller 101 zwei Ethernet-Schnittstellen 105, 106 auf, wobei die Ethernet-Schnittstelle 105 mit der Ethernet-Verbindung 102 und die Ethernet-Schnittstelle 106 mit der Ethernet-Verbindung 103 verbunden ist.

Der Ethernet-Controller 101 weist weiterhin eine Kommunikationseinheit 107 und eine Sicherheitssteuerung 108 auf.

Die beiden Ethernet-Schnittstellen 105, 106 sind mit der Kommunikationseinheit 107 verbunden. Die Kommunikationseinheit 107 ist weiterhin mit der Sicherheitssteuerung 108 verbunden und die Sicherheitssteuerung 108 weist eine Verbindung 109 zu mindestens einem Aktuator und/oder mindestens einem Sensor auf.

Beispielsweise übermittelt das Stellwerk 104 (im Wesentlichen) gleichzeitig über die Ethernet-Verbindungen 102, 103 und die Ethernet-Schnittstellen 105, 106 einen Stellwerksbefehl an den Element-Controller 101. Somit gibt es zwei Kommunikationswege (Ethernet-Verbindung 102 mit Ethernet-Schnittstelle 105 bzw. Ethernet-Verbindung 103 mit Ethernet-Schnittstelle 106) zwischen dem Stellwerk 104 und dem Element-Controller 101.

Fällt einer dieser Kommunikationswege aus, kann die Kommunikation zwischen dem Stellwerk 104 und dem Element-Controller 101 immer noch über den anderen Kommunikationsweg erfolgen.

Fällt die Kommunikationseinheit 107 aus, kommt es zu einem Ausfall des Element-Controllers 101 und den damit verbundenen Störungen.

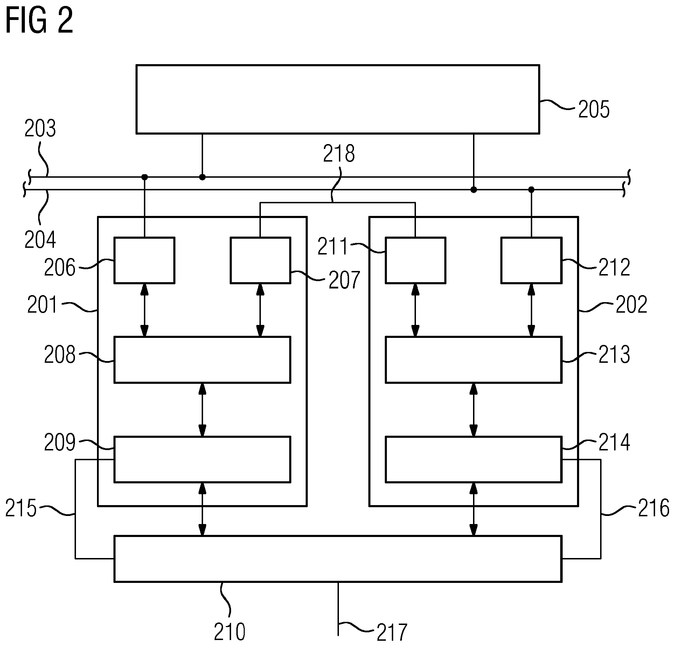

**Fig.2** zeigt ein schematisches Schaubild mit zwei Element-Controllern 201, 202, anhand derer die Ausfallsicherheit gegenüber dem in Fig.1 gezeigten Beispiel erhöht ist.

Der Element-Controller 201 ist über eine Ethernet-Verbindung 203 mit dem Stellwerk 205 verbunden. Der Element-Controller 201 weist zwei Ethernet-Schnittstellen 206, 207 auf, wobei die Ethernet-Schnittstelle 206 mit der Ethernet-Verbindung 203 und die Ethernet-Schnittstelle 207 mit einer Ethernet-Schnittstelle 211 des Ethernet-Controllers 202 verbunden ist. Diese (direkte) Verbindung wird auch mit dem Bezugszeichen 218 referenziert. Der Ethernet-Controller 201 weist weiterhin eine Kommunikationseinheit 208 und eine Sicherheitssteuerung 209 auf. Die beiden Ethernet-Schnittstellen 206, 207 sind mit der Kommunikationseinheit 208 verbunden. Die Kommunikationseinheit 208 ist weiterhin mit der Sicherheitssteuerung 209 verbunden.

Die Sicherheitssteuerung 209 ist mit einer Redundanzauswahl-Einheit 210 (auch bezeichnet als Auswahlschaltung) verbunden und die Redundanzauswahl-Einheit 210 weist eine Verbindung 217 zu mindestens einem Aktuator und/oder mindestens einem Sensor auf.

Der Element-Controller 202 ist über eine Ethernet-Verbindung 204 mit dem Stellwerk 205 verbunden. Hierzu weist der Element-Controller 202 eine Ethernet-Schnittstelle 212 auf, die mit der Ethernet-Verbindung 204 verbunden ist. Der Ethernet-Controller 202 weist weiterhin eine Kommunikationseinheit 213 und eine Sicherheitssteuerung 214 auf. Die beiden Ethernet-Schnittstellen 211, 212 sind mit der Kommunikationseinheit 213 verbunden. Die Kommunikationseinheit 213 ist weiterhin mit der Sicherheitssteuerung 214 verbunden.

Die Sicherheitssteuerung 214 ist mit der Redundanzauswahl-Einheit 210 verbunden. Weiterhin kann sowohl der Element-Controller 201 ein Mastertriggersignal an die Redundanzauswahl-Einheit 210 (angedeutet durch eine Verbindung 215) als auch kann der Element-Controller 202 ein Mastertriggersignal an die Redundanzauswahl-Einheit 210 (angedeutet durch eine Verbindung 216) übermitteln.

Die beiden Element-Controller 201, 202 entsprechen zusammen betrachtet einem funktionalen Element-Controller, der mit dem Stellwerk 205 verbunden ist. Durch die Verbindung 218 der beiden Ethernet-Schnittstellen 207 und 211 sind die beiden Element-Controller miteinander verbunden. Der Element-Controller 201 kommuniziert mit dem Stellwerk 205 über die Ethernet-Verbindung 203 und der Element-Controller 202 kommuniziert mit dem Stellwerk 205 über die Ethernet-Verbindung 204.

So können Nachrichten, die der Element-Controller 201 über die Ethernet-Verbindung 203 von dem Stellwerk 205 erhält, über die Verbindung 218 an den Element Controller 202 übermittelt werden. Umgekehrt können Nachrichten, die der Element-Controller 202 über die Ethernet-Verbindung 204 von dem Stellwerk 205 erhält, über die Verbindung 218 an den Element Controller 201 übermittelt werden.

Ist der Element-Controller 201 der Master und sendet Nachrichten an das Stellwerk 205, so leitet auch der Element-Controller 202 von dem Stellwerk 205 erhaltene Nachrichten (z.B. Antworten) über die Verbindung 218 an den Element-Controller 201 weiter. Ist der Element-Controller 202 der Master und sendet Nachrichten an das Stellwerk 205, so leitet entsprechend auch der Element-Controller 201 von dem Stellwerk 205 erhaltene Nachrichten (z.B. Antworten) über die Verbindung 218 an den Element-Controller 202.

Somit leitet derjenige Element-Controller, der als Slave agiert, die Nachrichten, die er von dem Stellwerk 205 erhält, über die Verbindung 218 an den Element-Controller, der als Master agiert, weiter. Insbesondere kann der Element-Controller, der als Slave agiert, den Inhalt der Nachrichten auswerten und überwachen.

Nach dem Einschalten der beiden Element-Controller 201 und 202 einigen sich diese zunächst, welcher als Master (EC Master) und welcher als Slave (EC Slave) agiert. Dies können die beiden Element-Controller 201, 202 über die Verbindung 218 aushandeln. Beispielsweise kann in beiden Element-Controllern 201, 202 mittels eines Zufallsgenerators je eine Verzögerungszeit bestimmt werden, wobei nach Ablauf dieser Verzögerungszeit eine Start-Nachricht an den anderen Element-Controller übermittelt wird. Empfängt ein Element-Controller diese Start-Nachricht solange die eigene Verzögerungszeit noch nicht abgelaufen ist, übernimmt dieser Element-Controller die Rolle des EC Slaves und bestätigt dies dem Sender der Start-Nachricht. Hat jedoch der empfangende Element-Controller beim Empfang der Start-Nachricht von dem anderen Element-Controller bereits selbst eine Start-Nachricht abgesetzt, wird der Initialisierungsprozess erneut gestartet, bis eine eindeutige Rollenverteilung erreicht ist.

Der EC Master funktioniert ähnlich einem einzelnen Element-Controller. Der EC Slave überwacht die Kommunikation des EC Masters und verhält sich wie der EC Master mit der Einschränkung, dass seine Ausgänge nicht aktiv sind (also keine Signale in Richtung der Verbindung 217 bereitgestellt werden und keine von dieser Verbindung 217 bereitgestellten Signale verarbeitet werden).

Ebenfalls führt der EC Slave keine eigens initiierte Kommunikation mit dem Stellwerk 205 durch (dies obliegt dem MC Master, solange dieser funktioniert).

Stellt der EC Slave fest, dass ein Fehler beim EC Master vorliegt, übernimmt er die Rolle des EC Masters. Beispielsweise kann der EC Slave einen Fehler dadurch feststellen, dass Status-Nachrichten ausbleiben oder bestimmte Fehlernachrichten von dem EC Master abgesetzt und bei dem EC Slave empfangen werden.

Vorzugsweise übernimmt der EC Slave die Rolle des EC Masters, nachdem er dies dem bisherigen (defekten) EC Master mitgeteilt hat.

Beispielsweise handeln der Element-Controller 201 und der Element-Controller 202 nach dem Start aus, dass der Element-Controller 201 der EC Master und der Element-Controller 202 der EC Slave ist. Der Element-Controller 201 (EC Master) übermittelt daraufhin das Mastertriggersignal 215 an die Redundanzauswahl-Einheit 210, so dass infolgedessen eine Umschaltung bzw. Aktivierung aller Ein- und Ausgänge auf den Element-Controller 201 erfolgt.

Tritt nun ein Fehler in dem EC Master auf (z.B. ein Fehler in der Ethernet-Schnittstelle 206, ein Fehler in der Kommunikationseinheit 208 oder ein Fehler in der Sicherheitssteuerung 209), so bemerkt dies der EC Slave (z.B. durch das Ausbleiben einer Reaktion, das Ablaufen eines Timers, eine Fehlernachricht von dem EC Master) und initiiert eine Umschaltung von dem Element-Controller 201 auf den Element-Controller 202, indem er das Mastertriggersignal 216 an die Redundanzauswahl-Einheit 210 übermittelt, so dass infolgedessen eine Umschaltung bzw. Aktivierung aller Ein- und Ausgänge auf den Element-Controller 202 erfolgt. Danach agiert der Element-Controller 202 als EC Master. Der Element-Controller 202 kann also aktiv die Umschaltung von dem Betrieb als EC Slave in den Betrieb als EC Master veranlassen. Dies ist insbesondere von Vorteil, falls ein Fehler in dem bisherigen EC Master (hier dem Element-Controller 201) so gravierend ist, dass er keine Umschaltung mehr veranlassen könnte.

Weiterhin ist es von Vorteil, dass die Redundanzauswahl-Einheit 210 so eingerichtet ist, dass sie infolge des jeweiligen Mastertriggersignals (in diesem Beispiel des Mastertriggersignals 216 von dem Element-Controller 202) eine Umschaltung der Verbindung 217 auf den Element-Controller 202 vornimmt und damit die Verbindung 217 funktional von dem Element-Controller 201 trennt. Damit wird verhindert, dass der defekte Element-Controller 201 auf die Verbindung 217 wirkt.

Beispielsweise kann die Redundanzauswahl-Einheit 210 eine Schaltung aufweisen, die sicherstellt, dass entweder die Ein-/Ausgänge der Sicherheitssteuerung 209 oder die Ein-/Ausgänge der Sicherheitssteuerung 214 über die Verbindung 217 mit den Aktuatoren und/oder Sensoren verbunden sind.

Ergänzend sei angemerkt, dass es vorkommen kann, dass (noch) keiner der Element-Controller den Zustand EC Master eingenommen hat. Dies kann z.B. bei der Initialisierung oder wenn beide Element-Controller defekt sind vorkommen. In diesem Fall würde keines der Mastertriggersignale 215, 216 einen EC Master bestimmen und die Ein- und Ausgänge auf den beiden Element-Controllern 201, 202 wären passiv, d.h. es würde keine Signale über die Verbindung 217 eingelesen oder ausgegeben.

Somit kann der jeweilige Element-Controller 201, 202 durch Übermittlung des Mastertriggersignals 215, 216 die Redundanzauswahl-Einheit 210 derart ansteuern, dass der Übermittler des Mastertriggersignals 215, 216 als Master zur Kommunikation mit den Aktuatoren und/oder Sensoren über die Verbindung 217 aktiv geschaltet wird. Der andere Element-Controller wird dann automatisch zum EC Slave.

Da der EC Slave den gleichen inneren Zustand aufweist wie der EC Master, kann er nach erfolgter Umschaltung sofort den Betrieb als EC Master übernehmen.

Beispielsweise können die folgenden Fälle unterschieden werden:
- Ist nur eine der Ethernet-Schnittstellen 206, 207 des EC Masters (des Element-Controllers 201) defekt, erfolgt keine Umschaltung des EC Slaves auf EC Master. Optional könnte auch in diesem Fall eine Umschaltung auf den Element-Controller 202 als EC Master durchgeführt werden, da der Element-Controller 201 bereits einen Defekt aufweist und somit dessen redundante Funktionalität eingeschränkt ist. Beispielsweise könnte die Reparatur des Element-Controllers 201 veranlasst werden und nach abgeschlossener Reparatur könnte wieder auf den Element-Controller 201 umgeschaltet werden.
- Ist die Kommunikationseinheit 208 des EC Masters 201 defekt, erfolgt die Umschaltung auf den Element-Controller 202 als EC Master.
- Ist die Sicherheitssteuerung 209 des EC Masters 201 defekt oder meldet diese Sicherheitssteuerung 209 einen Fehler, erfolgt die Umschaltung auf den Element-Controller 202 als EC Master.
- Sind die Kommunikationseinrichtungen 208, 209 beider Element-Controller 201, 202 defekt, erfolgt eine Fehlermeldung an das Stellwerk 205 und beide Element-Controller 201, 202 werden deaktiviert.
- Stellen nacheinander beide Sicherheitssteuerungen 209, 214 Fehler fest, erfolgt eine Fehlermeldung an das Stellwerk 205 und beide Element-Controller 201, 202 werden deaktiviert.

Die Redundanzumschaltung kann hierbei allein durch die Auswertung des Kommunikationsverhaltens des jeweils aktiven EC Masters bestimmt werden, wobei diese Auswertung von dem EC Slave durchgeführt wird. Es ist keine Redundanzlogik auf der analogen Ausgangsseite der Element-Controller erforderlich. Auch eine Fallunterscheidung oder ein spezielles Funktionsmodul in der Stellwerklogik kann entfallen.

Obwohl die Erfindung im Detail durch das mindestens eine gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

## Patentansprüche

1. Verfahren zum Umschalten zwischen Element-Controllern (201, 202),
- wobei zwei Element-Controller vorgesehen sind, von denen ein erster Element-Controller (201) in einem Master-Betriebsmodus und ein zweiter Element-Controller (202) in einem Slave-Betriebsmodus betrieben wird,
- bei dem der zweite Element-Controller (202) einen Fehler in dem ersten Element-Controller (201) bestimmt und
- bei dem der zweite Element-Controller (202) von dem Slave-Betriebsmodus in den Master-Betriebsmodus wechselt, indem der zweite Element-Controller (202) über ein Triggersignal (216) eine Auswahlschaltung (210) so ansteuert, dass der Ausgang des zweiten Element-Controllers (202) statt des Ausgangs des ersten Element-Controllers (201) mit mindestens einem Aktuator und/oder mindestens einem Sensor verbunden (217) wird,
**dadurch gekennzeichnet, dass**
- jeder der Element-Controller zwei als Ethernet-Schnittstellen ausgebildete Schnittstellen aufweist,
- wobei eine (206) der beiden Schnittstellen des ersten Element-Controllers (201) über eine als Ethernet-Verbindung ausgebildete Kommunikationsverbindung (203) mit einem Stellwerk (205) verbunden ist und der erste Element-Controller (201) über diese eine Kommunikationsverbindung (203) mit dem Stellwerk (205) kommuniziert,
- wobei eine (212) der beiden Schnittstellen des zweiten Element-Controllers (202) über eine als weitere Ethernet-Verbindung ausgebildete weitere Kommunikationsverbindung (204) mit dem Stellwerk (205) verbunden ist und der zweite Element-Controller (202) über diese weitere Kommunikationsverbindung (204) mit dem Stellwerk (205) kommuniziert und
- wobei die andere (207) der beiden Schnittstellen des ersten Element-Controllers (201) und die andere (211) der beiden Schnittstellen des zweiten Element-Controllers (202) über eine direkte Verbindung (218) miteinander verbunden sind und derjenige Element-Controller (202), der als Slave agiert, Nachrichten, die er vom Stellwerk (205) erhält, auswertet und überwacht und diese Nachrichten über die direkte Verbindung (218) an den Element-Controller (202), der als Master agiert, weiterleitet.

2. Verfahren nach Anspruch 1, bei dem zuvor der erste und der zweite Element-Controller aushandeln, wer in dem Master-Betriebsmodus und wer in dem Slave-Betriebsmodus betrieben wird, indem nach einer vorgegebenen Zeitdauer eine Start-nachricht an den jeweils anderen Element-Controller übermittelt wird und derjenige Element-Controller in den Slave-Betriebsmodus wechselt, der diese Startnachricht empfängt bevor er eine Startnachricht gesendet hat.

3. Verfahren nach Anspruch 2, bei dem die vorgegebene Zeitdauer basierend auf einem Zufallsgenerator, einem Pseudozufallsgenerator oder basierend auf einem deterministischen Muster bestimmt wird.

4. Verfahren nach einem der Ansprüche 2 oder 3, bei dem derjenige Element-Controller, der in den Slave-Betriebsmodus wechselt, den anderen Element-Controller hierüber informiert und der andere Element-Controller daraufhin in den Master-Betriebsmodus wechselt.

5. Verfahren nach einem der vorhergehenden Ansprüche, bei dem in dem Master-Betriebsmodus der Element-Controller mit einem Stellwerk kommuniziert und bei dem in dem Slave-Betriebsmodus der Element-Controller die Kommunikation des Element-Controllers, der in dem Master-Betriebsmodus ist, überwacht.

6. Verfahren nach einem der vorhergehenden Ansprüche, bei dem der zweite Element-Controller den Fehler bestimmt basierend auf mindestens einer der folgenden Möglichkeiten:
- einer Nachricht oder einer Fehlernachricht des ersten Element-Controllers,
- einer Nachricht von dem Stellwerk,
- anhand eines Zeitablaufs,
- anhand einer nicht gesendeten oder einer nicht angekommenen Nachricht.

7. Verfahren nach einem der vorhergehenden Ansprüche,
- bei dem jeder der Element-Controller eine Kommunikationseinheit und eine Sicherheitssteuerung aufweist,
- wobei die Kommunikationseinheit mit den zwei Schnittstellen verbunden ist,
- wobei die Sicherheitssteuerung zwischen der Kommunikationseinheit und der Auswahlschaltung vorgesehen ist.

8. Verfahren nach einem der vorhergehenden Ansprüche, bei dem der mindestens eine Aktuator und/oder der mindestens eine Sensor mindestens eine(n) der folgenden umfassen:
- eine Balise,
- einen Achszähler,
- eine Weiche,
- ein Signal.

9. System zum Umschalten zwischen Element-Controllern (201, 202)
- umfassend ein Stellwerk (205), einen ersten Element-Controller (201), einen zweiten Element-Controller (202) und eine Auswahlschaltung (210),
- wobei der erste Element-Controller (201) in einem Master-Betriebsmodus und der zweite Element-Controller (202) in einem Slave-Betriebsmodus betreibbar ist,
- wobei der zweite Element-Controller (202) derart eingerichtet ist,
- dass ein Fehler in dem ersten Element-Controller (201) bestimmbar ist,
- dass basierend auf dem Fehler der zweite Element-Controller (202) derart eingerichtet ist, das der zweite Element-Controller (202) von dem Slave-Betriebsmodus in den Master-Betriebsmodus wechselt, indem der zweite Element-Controller (202) über ein Triggersignal (216) eine Auswahlschaltung (210) so ansteuert, dass der Ausgang des zweiten Element-Controllers (202) statt des Ausgangs des ersten Element-Controllers (201) mit mindestens einem Aktuator und/oder mindestens einem Sensor verbunden (217) wird.
**dadurch gekennzeichnet, dass**
- jeder der Element-Controller zwei als Ethernet-Schnittstellen ausgebildete Schnittstellen aufweist,
- wobei eine (206) der beiden Schnittstellen des ersten Element-Controllers (201) über eine als Ethernet-Verbindung ausgebildete Kommunikationsverbindung (203) mit einem Stellwerk (205) verbunden ist und der erste Element-Controller (201) eingerichtet ist, über diese eine Kommunikationsverbindung (203) mit dem Stellwerk (205) zu kommunizieren,
- wobei eine (212) der beiden Schnittstellen des zweiten Element-Controllers (202) über eine als weitere Ethernet-Verbindung ausgebildete weitere Kommunikationsverbindung (204) mit dem Stellwerk (205) verbunden ist und der zweite Element-Controller (202) eingerichtet ist, über diese weitere Kommunikationsverbindung (204) mit dem Stellwerk (205) zu kommunizieren und
- wobei die andere (207) der beiden Schnittstellen des ersten Element-Controllers (201) und die andere (211) der beiden Schnittstellen des zweiten Element-Controllers (202) über eine direkte Verbindung (218) miteinander verbunden sind und derjenige Element-Controller (202), der als Slave agiert, eingerichtet ist, Nachrichten, die er vom Stellwerk (205) erhält, auszuwerten und zu überwachen und diese Nachrichten über die direkte Verbindung (218) an den Element-Controller (202), der als Master agiert, weiterzuleiten.

## Claims

1. Method for switching over between element controllers (201, 202),
- wherein two element controllers are provided, of which a first element controller (201) is operated in a master operating mode and a second element controller (202) is operated in a slave operating mode,
- in which the second element controller (202) detects an error in the first element controller (201) and
- in which the second element controller (202) switches from the slave operating mode into the master operating mode in that the second element controller (202) uses a trigger signal (216) to actuate a selection circuit (210) such that the output of the second element controller (202), instead of the output of the first element controller (201), is connected (217) to at least one actuator and/or at least one sensor,
**characterised in that**
- each of the element controllers has two interfaces embodied as Ethernet interfaces,
- wherein one (206) of the two interfaces of the first element controller (201) is connected to an interlocking (205) via a communication connection (203) embodied as an Ethernet connection, and the first element controller (201) communicates with the interlocking (205) via said one communication connection (203),
- wherein one (212) of the two interfaces of the second element controller (202) is connected to the interlocking (205) via a further communication connection (204) embodied as a further Ethernet connection, and the second element controller (202) communicates with the interlocking (205) via said further communication connection (204), and
- wherein the other (207) of the two interfaces of the first element controller (201) and the other (211) of the two interfaces of the second element controller (202) are interconnected via a direct connection (218), and the element controller (202) acting as slave evaluates and monitors messages which it obtains from the interlocking (205) and forwards said messages to the element controller (202) acting as master via a direct connection (218) .

2. Method according to claim 1, in which the first and the second element controller negotiate beforehand who is being operated in the master operating mode and who is being operated in the slave operating mode, in that after a predefined period of time a start message is transmitted to the other element controller in each case, and the element controller which has received this start message before it has sent a start message switches into the slave operating mode.

3. Method according to claim 2, in which the predefined period of time is determined on the basis of a random generator, a pseudo-random generator or based on a deterministic pattern.

4. Method according to one of claims 2 or 3, in which the element controller which switches into the slave operating mode informs the other element controller as to this and the other element controller consequently switches into the master operating mode.

5. Method according to one of the preceding claims, in which, in the case of the master operating mode, the element controller communicates with an interlocking and in which, in the case of the slave operating mode, the element controller monitors the communication of the element controller which is in the master operating mode.

6. Method according to one of the preceding claims, in which the second element controller detects the failure on the basis of at least one of the following possibilities:
- a message or an error message of the first element controller,
- a message from the interlocking,
- on the basis of a time delay,
- on the basis of a message not being sent or not being received.

7. Method according to one of the preceding claims,
- in which each of the element controllers has a communication unit and a safety controller,
- wherein the communication unit is connected to the two interfaces,
- wherein the safety controller is provided between the communication unit and the selection circuit.

8. Method according to one of the preceding claims, in which the at least one actuator and/or the at least one sensor comprise at least one of the following:
- a balise,
- an axle counter,
- a track switch,
- a signal.

9. System for switching over between element controllers (201, 202)
- comprising an interlocking (205), a first element controller (201), a second element controller (202) and a selection circuit (210),
- wherein the first element controller (201) is able to be operated in a master operating mode and the second element controller (202) is able to be operated in a slave operating mode,
- wherein the second element controller (202) is configured such that
- a failure in the first element controller (201) is able to be detected,
- based on the error, the second element controller (202) is configured such that the second element controller (202) switches from the slave operating mode into the master operating mode in that the second element controller (202) uses a trigger signal (216) to actuate a selection circuit (210) such that the output of the second element controller (202), instead of the output of the first element controller (201), is connected (217) to at least one actuator and/or at least one sensor,
**characterised in that**
- each of the element controllers has two interfaces embodied as Ethernet interfaces,
- wherein one (206) of the two interfaces of the first element controller (201) is connected to an interlocking (205) via a communication connection (203) embodied as an Ethernet connection, and the first element controller (201) is configured to communicate with the interlocking (205) via said one communication connection (203),
- wherein one (212) of the two interfaces of the second element controller (202) is connected to the interlocking (205) via a further communication connection (204) embodied as a further Ethernet connection, and the second element controller (202) is configured to communicate with the interlocking (205) via said further communication connection (204), and
- wherein the other (207) of the two interfaces of the first element controller (201) and the other (211) of the two interfaces of the second element controller (202) are interconnected via a direct connection (218), and the element controller (202) acting as slave is configured to evaluate and monitor messages which it obtains from the interlocking (205) and to forward said messages to the element controller (202) acting as master via a direct connection (218).

## Revendications

1. Procédé de commutation entre des unités (201, 202) de commande d'élément,
- dans lequel il est prévu deux unités de commande d'élément, dont une première unité (201) de commande d'élément fonctionne suivant un mode de fonctionnement en maître et une deuxième unité (202) de commande d'élément fonctionne suivant un mode de fonctionnement en esclave,
- dans lequel la deuxième unité (202) de commande d'élément détermine un défaut dans la première unité (201) de commande d'élément et
- dans lequel la deuxième unité (202) de commande d'élément passe du mode de fonctionnement en esclave au mode de fonctionnement en maître par le fait que la deuxième unité (202) de commande d'élément commande, par un signal (216) de déclenchement, un circuit (210) de sélection, de manière à relier (217) la sortie de la deuxième unité (202) de commande d'élément ? au lieu de la sortie de la première unité (201) de commande d'élément, à au moins un actionneur et/ou à au moins un capteur,
**caractérisé en ce que**
- chacune des unités de commande d'élément a deux interfaces, constituées en interfaces d'Ethernet,
- dans lequel l'une (206) des deux interfaces de la première unité (201) de commande d'élément est reliée à un poste (205) d'aiguillage par une liaison (203) de communication, constituée en liaison Ethernet, et la première unité (201) de commande d'élément communique avec le poste (205) d'aiguillage par cette liaison (203) de communication,
- dans lequel l'une (212) des deux interfaces de la deuxième unité (202) de commande d'élément est reliée au poste (205) d'aiguillage par une autre liaison (204) de communication, constituée en autre liaison Ethernet, et la deuxième unité (202) de commande d'élément communique avec le poste (205) d'aiguillage par cette autre liaison (204) de communication et
- dans lequel l'autre (207) des deux interfaces de la première unité (201) de commande d'élément et l'autre (211) des deux interfaces de la deuxième unité (202) de commande d'élément sont reliées entre elles par une liaison (218) directe, et l'unité (202) de commande d'élément, qui agit comme esclave, exploite des messages qu'elle reçoit du poste (205) d'aiguillage et contrôle et achemine ces messages par la liaison (218) directe à l'unité (202) de commande d'élément, qui agit comme maître.

2. Procédé suivant la revendication 1, dans lequel, auparavant, la première et la deuxième unité de commande d'élément décident de celle qui fonctionnera en mode de fonctionnement en maître et de celle qui fonctionnera en mode de fonctionnement en esclave, par le fait que l'on transmet, après une durée donnée à l'avance, un message de démarrage à, respectivement, l'autre unité de commande d'élément et l'unité de commande d'élément, qui reçoit ce message de démarrage, passe dans le mode de fonctionnement en esclave avant qu'elle n'envoie un message de démarrage.

3. Procédé suivant la revendication 2, dans lequel on détermine la durée donnée à l'avance sur la base d'un générateur aléatoire, d'un générateur pseudo aléatoire ou sur la base d'un modèle déterministe.

4. Procédé suivant l'une des revendications 2 ou 3, dans lequel celle des unités de commande d'élément, qui passe dans le mode de fonctionnement en esclave, en informe l'autre unité de commande d'élément et l'autre unité de commande d'élément passe ensuite dans le mode de fonctionnement en maître.

5. Procédé suivant l'une des revendications précédentes, dans lequel, dans le mode de fonctionnement en maître, l'unité de commande d'élément communique avec un poste d'aiguillage et dans lequel, dans le mode de fonctionnement en esclave, l'unité de commande d'élément contrôle la communication de l'unité de commande d'élément, qui est en mode de fonctionnement en maître.

6. Procédé suivant l'une des revendications précédentes, dans lequel la deuxième unité de commande d'élément détermine le défaut sur la base d'au moins l'une des possibilité suivantes :
- un message ou un message de défaut de la première unité de commande d'élément,
- un message du poste d'aiguillage,
- à l'aide d'un écoulement de temps,
- à l'aide d'un message non envoyé ou non arrivé.

7. Procédé suivant l'une des revendications précédentes,
- dans lequel chacune des unités de commande d'élément a une unité de communication et une commande de sécurité,
- dans lequel l'unité de communication est reliée aux deux interfaces,
- dans lequel la commande de sécurité est prévue entre l'unité de communication et le circuit de sélection.

8. Procédé suivant l'une des revendications précédentes, dans lequel le au moins un actionneur et/ou le au moins un capteur comprend au moins l'un des suivants :
- une balise,
- un compteur de roues,
- un aiguillage,
- un signal.

9. Système de commutation entre des unités (201, 202) de commande d'élément
- comprenant un poste (205) d'aiguillage, une première unité (201) de commande d'élément, une deuxième unité (202) de commande d'élément et un circuit (210) de sélection,
- dans lequel la première unité (201) de commande d'élément peut fonctionner dans un mode de fonctionnement en maître et la deuxième unité (202) de commande d'élément peut fonctionner dans un mode de fonctionnement en esclave,
- dans lequel la deuxième unité (202) de commande d'élément est conçue
- de manière à pouvoir déterminer un défaut dans la première unité (201) de commande d'élément,
- en ce que, sur la base du défaut, la deuxième unité (202) de commande d'élément est conçue pour faire passer la deuxième unité (202) de commande d'élément du mode de fonctionnement en esclave au mode de fonctionnement en maître, par le fait que la deuxième unité (202) de commande d'élément commande, par un signal (216) de déclenchement, un circuit (210) de sélection, de manière à relier (217) la sortie de la deuxième unité (202) de commande d'élément, au lieu de la sortie de la première unité (201) de commande d'élément, à au moins un actionneur et/ou à au moins un capteur,
**caractérisé en ce que**
- chacune des unités de commande d'élément a deux interfaces, constituées en interfaces d'Ethernet,
- dans lequel l'une (206) des deux interfaces de la première unité (201) de commande d'élément est reliée à un poste (205) d'aiguillage par une liaison (203) de communication, constituée en liaison Ethernet et la première unité (201) de commande d'élément communique avec le poste (205) d'aiguillage par cette liaison (203) de communication,
- dans lequel l'une (212) des deux interfaces de la deuxième unité (202) d'élément de commande est reliée au poste (205) d'aiguillage par une autre liaison (204) de communication, constituée en autre liaison Ethernet, et la deuxième unité (202) de commande d'élément est conçue pour communiquer avec le poste (205) d'aiguillage par cette autre liaison (204) de communication et
- dans lequel l'autre (207) des deux interfaces de la première unité (201) de commande d'élément et l'autre (211) des deux interfaces de la deuxième unité (202) de commande d'élément sont reliées entre elles par une liaison (218) directe et l'unité (202) de commande d'élément, qui agit comme esclave, est conçue pour exploiter des messages qu'elle reçoit du poste (205) d'aiguillage et pour contrôler et acheminer ces messages par la liaison (218) directe à l'unité (202) de commande d'élément, qui agit comme maître.
